# EUROPÄISCHE PATENTSCHRIFT

(11) **EP 0 584 591 B1**
(45) Veröffentlichungstag und Bekanntmachung des Hinweises auf die Patenterteilung: **06.11.1996**
(21) Anmeldenummer: 93112452.3
(22) Anmeldetag: 04.08.1993
(51) Int. Cl.: F16L 37/084, B65D 25/24, B67D 3/00

(54) **Automatische Kopplungsvorrichtung**
Automatic coupling device
Dispositif d'accouplement automatique

(30) Priorität: 06.08.1992 DE 9210547 U
(43) Veröffentlichungstag der Anmeldung: 02.03.1994
(73) Patentinhaber: Hefter, Georg, sen., 83209 Prien am Chiemsee (DE)
(72) Erfinder: Hefter, Georg, sen., 83209 Prien am Chiemsee (DE)
(74) Vertreter: Grättinger & Partner

(56) Entgegenhaltungen:
- WO-A-90/03919
- DE-A- 489 610
- DE-A- 3 614 193
- US-A- 2 803 473
- US-A- 5 169 020
- US-A- 5 224 678
- US-A- 5 228 601

## Beschreibung

Die Erfindung betrifft eine Kopplungsvorrichtung zum stirnseitig oder am Umfang abgedichteten Koppeln von zwei im wesentlichen rohr- oder stangenförmigen Kopplungsstücken.

Um Rohre oder Schläuche, über die Flüssigkeiten oder Schüttgut transportiert werden soll, lösbar miteinander zu verbinden, werden Kopplungsvorrichtungen eingesetzt, deren Stirnseite miteinander koppelbare Kopplungsstücke manuell entriegelt werden müssen, bevor die Kopplungsstücke voneinander getrennt werden können.

Bei herkömmlichen Kopplungsvorrichtungen werden die Dichtkräfte durch die Eigenelastizität elastischer Dichtringe oder dgl. erzeugt. Aufgrund altersbedingter Versprödung oder durch Abnutzung können sich die Dichtkräfte herkömmlicher Kopplungsvorrichtungen ändern, womit eine dichte Verbindung der Kopplungsstücke nicht in jedem Fall gewährleistet ist.

Es ist Aufgabe der Erfindung, eine Kopplungsvorrichtung anzugeben, die es erlaubt, die miteinander zu verbindenden Kopplungsstücke mit definiertem Anpreßdruck stirnseitig abgedichtet miteinander zu verbinden.

Gemäß der Erfindung umfaßt die Kopplungsvorrichtung ein Basisteil, an welchem ein erstes der beiden Kopplungsstücke im wesentlichen in Richtung seiner Rohrachse verschiebbar geführt ist und welches einen Anschlag aufweist, an dem ein mit einem zweiten der beiden Kopplungsstücke verbundener Gegenanschlag in der Kopplungsendstellung, in welcher die Kopplungsstücke gekuppelt sind, z.B. indem sie mit ihren Stirnseiten aneinander anliegen, in Richtung seiner Rohrachse zum ersten Kopplungsstück hin fixiert ist, wenigstens eine an dem Basisteil um eine quer zu einer Axiallängsschnittebene des ersten Kopplungsstücks verlaufende Schwenkachse schwenkbar und in der Axiallängsschnittebene verschiebbar geführt Klaue, die über ein Mitnahmeorgan mit dem ersten Kopplungsstück gekuppelt ist, ein Keilflächengetriebe zwischen dem zweiten Kopplungsstück und jeder Klaue, vorzugsweise der Art, daß es einander zugeordnete Schrägschubflächen an jeder Klaue und dem zweiten Kopplungsstück umfaßt, wobei die Schrägschubfläche des zweiten Kopplungsstücks dem ersten Kopplungsstück abgewandt ist, und eine jede Klaue zur Rohrachse der Kopplungsstücke hin federnd vorspannende Federeinrichtung.

Bei einer solchen Kopplungsvorrichtung wird der Anpreßdruck, mit dem die beiden Kopplungsstücke stirnseitig aneinander anliegen, im wesentlichen durch die Federkraft der Federeinrichtung bestimmt. Die Schrägschubflächen setzen die zur Rohrachse hin gerichtete Komponente der Federkraft nach Art eines Keilflächengetriebes in eine in Richtung der Rohrachse verlaufende Kraftkomponente um, wobei die an dem Basisteil und dem zweiten Kopplungsstück vorgesehenen Anschläge den Bewegungshub des Keilflächengetriebes und damit die Größe der Kraftkomponente definiert begrenzen. Insbesondere entsteht durch die Begrenzung der Schiebebewegung der Klauen in Abhängigkeit von der Federvorspannung und dem Winkel der Schrägschubfläche des zweiten Kopplungsstücks eine "Sicherheitsventilfunktion", wenn auf die Kopplungsstücke Querkräfte oder Längszugkräfte einwirken. Die Verbindung kann sich geringfügig öffnen bzw. bewegen, ohne daß Zerstörungen eintreten. Diese Bewegung kann z.B. durch Schalter erfaßt werden, um Sicherheitsmaßnahmen auszulösen. Trotzdem bleibt die Verbindung formschlüssig erhalten und wird beim Nachlassen der Belastung sofort wieder in die ursprüngliche Position zurückgeführt.

Da es für die Kopplung der beiden Kopplungsstücke genügt, die beiden Anschläge gegeneinander zu legen, um eine definierte Dichtkraft zu erzeugen, eignet sich die erfindungsgemäße Kopplungsvorrichtung insbesondere für automatische Kopplungsvorrichtungen, die sowohl selbsttätig geschlossen als auch selbsttätig geöffnet werden können. Die Erfindung eignet sich damit insbesondere für den Anschluß mehrfach verwendbarer Behälter, wie z.B. Fässer oder dgl., die durch bloßes Absetzen des mit dem zweiten Kopplungsstück versehenen Behälters auf einer bspw. durch das Basisteil gebildeten Unterlage die Kopplungsvorrichtung schließen. In einem solchen Fall bildet der Behälter selbst den Gegenanschlag und bestimmt durch seine Aufsetzposition den Anpreßdruck der stirnseitigen Abdichtung. Das Behältergewicht hält hierbei die Kopplungsvorrichtung geschlossen. Die Kopplungsvorrichtung öffnet automatisch beim Abnehmen des Behälters. Eine Trennung der Verbindung ist erst durch von außen wirkende Zug- oder Druckkräfte auf die Klauen möglich. Ein von innen wirkender Mediendruck bzw. relativ zueinander auf die beiden Kopplungsstücke wirkende Kräfte können die Verbindung nicht lösen.

Durch geeignete Dimensionierung der Kinematik der Klauen und der Anschläge kann jedoch auch erreicht werden, daß die Klauen, bezogen auf die Kraftrichtung der Federeinrichtung, bei aneinanderliegenden Anschlägen eine Übertotpunktlage einnehmen. Aufgrund der Übertotpunktlage wächst die Federkraft beim Auseinanderziehen, insbesondere aber auch beim gemeinsamen Längsverschieben der Kopplungsstücke bis zum Erreichen der Totpunktlage an und verriegelt im übrigen die Kopplungsstücke bei geschlossener Kopplungsvorrichtung aneinander.

Die Klauen sind sowohl schwenkbar, um eine Annäherungsbewegung der Anschläge zu ermöglichen, als auch, bezogen auf ihre Schrägschubflächen, quer zur Rohrachse verschiebbar, um bei aneinanderliegenden Anschlägen die Dichtungskraft ausschließlich auf die Federkraft der Federeinrichtung zurückführen zu können.

In einer besonders einfachen Konstruktion ist die Klaue mittels eines Zapfen-Langloch-Gelenks sowohl schwenkbar als auch quer zur Rohrachse verschiebbar an dem Basisteil gelagert. Dies läßt sich besonders einfach dadurch erreichen, daß das Langloch in der Klaue vorgesehen ist und auf der der Schrägschubfläche der Klaue zugewandten Seite des das Langloch durchsetzenden Zapfens in der Klaue eine in Längsrichtung des Langlochs verlaufende, zum Langloch hin offene Kammer vorgesehen ist, in der eine an dem Zapfen abgestützte Feder angeordnet ist. Bei der Kammer handelt es sich der Einfachheit halber um eine längs des Langlochs verlaufende, die Achse des Zapfens schneidende Bohrung in der ansonsten einteiligen Klaue.

Um die Klaue in Richtung ihrer Schwenkachse am Basisteil zu fixieren, weist der Zapfen zweckmäßigerweise eine Umfangsnut auf, in die die Feder zur Fixierung von Klaue und Zapfen relativ zueinander eingreift. Auf diese Weise muß nur eine dieser beiden Komponenten am Basisteil axial fixiert sein. Zweckmäßigerweise ist hierzu die Klaue zwischen zwei Wangen des Basisteils geführt, um Kippbewegungen der Klaue, die aufgrund des Langlochs möglich wären, zu verhindern. Bei dem Zapfen kann es sich dann um einen simplen Steckzapfen handeln.

Anstelle eines Langloch-Zapfen-Gelenks, welches sowohl die Schwenkbewegung als auch die Verschiebewegung der Klaue zuläßt, kann die Klaue auch zweiteilig ausgeführt sein, und ein im wesentlichen ohne radiales Spiel mittels eines Zapfenlagers schwenkbar an dem Basisteil gelagertes erstes Klauenteil sowie ein quer zur Rohrachse verschiebbar an dem ersten Klauenteil geführtes zweites Klauenteil aufweisen, das von einer Feder relativ zum ersten Klauenteil zur Rohrachse hin vorgespannt ist. Diese Variante ermöglicht Klauen mit besonders präzis relativ zum Basisteil geführten Schrägschubflächen. Die axiale Fixierung des ersten Klauenteils relativ zum Zapfen kann entsprechend der Klaue mit Langloch-Zapfen-Gelenk erfolgen, wobei die in eine Nut des Zapfens eingreifende Feder in einer Führungskammer, in welcher das zweite Klauenteil verschiebbar ist, angeordnet ist.

Das Mitnahmeorgan überträgt die Reaktionskraft der Schrägschubfläche der Klaue auf das relativ zum Basisteil verschiebbar geführte erste Kopplungsstück. In einer besonders einfachen Variante ist das Mitnahmeorgan als flexibles Zugorgan ausgebildet, das neben der Reaktionskraft auch eine Querbewegung seiner Befestigungspunkte an Klaue und erstem Kopplungsstück relativ zueinander ermöglicht. Allerdings wird der Montageaufwand verringert, wenn das Mitnahmeorgan einteilig an der Klaue angeformt ist, vorzugsweise in der Form, daß das den Kopplungsstücken zugewandte Ende der Klaue eine zweischenklige Gabel bildet, deren erster Schenkel die Schrägschubfläche aufweist und deren zweiter Schenkel eine vom zweiten Kopplungsstück wegweisende Anlagefläche des ersten Kopplungsstücks hintergreift.

Die Stirnseiten der beiden Kopplungsteile sind zweckmäßigerweise durch einen Dichtungsring in der Stirnfläche eines oder beider Kopplungsstücke gegeneinander abgedichtet, bspw. in der Form, daß eines der Kopplungsstücke eine Ringdichtung trägt, dem eine Ringschneide des anderen Kopplungsstücks zugeordnet ist. Um einen über den Umfang gleichförmigen Anpreßdruck der Dichtung zu erzielen, sind die Kopplungsstücke bevorzugt rotationssymmetrisch ausgebildet und es sind mehrere in gleichen Winkelabständen um die Rohrachse herum angeordnete Klauen an dem Basisteil gelagert. Ringdichtungen der vorstehend erläuterten Art werden auf diese Weise gleichmäßig beansprucht. Auch lassen sich die Schrägschubflächen des zweiten Kopplungsstücks herstellungstechnisch besonders einfach als Konusfläche ausbilden.

Der definierte Anpreßdruck ist nicht von einer elastischen Dichtung abhängig. Es kann sich bei den Dichtflächen auch um zwei hart aufeinanderliegende und hochpräzise Flächen handeln.

Die Kopplungsstücke können jedoch auch geringfügig ineinandergesteckt werden. Die Abdichtung erfolgt dann durch eine am Umfang des einen Kopplungsstückes befindliche Dichtung. Dadurch entstehen hochdruckfeste bzw. präzise positionierte Verbindungen. Durch eine automatische Indexierung, Klemmung oder Verriegelung der Klauen wird die Verbindung ungewollt unlösbar. In diesem Fall ermöglicht erst eine kontrollierte Lösung der Indexierung die Trennung.

Die Schrägschubflächen der Klauen liegen bereits an den Schrägschubflächen des zweiten Kopplungsstücks an, während sich die Anschläge aneinander annähern. Um stets eine definierte Auflageposition der einander zugeordneten Schrägschubflächen zu erreichen, ist in einer bevorzugten Ausführungsform vorgesehen, daß die Schrägschubfläche des zweiten Kopplungsstücks oder der Klaue eine konvex gewölbte Kontur und die jeweils andere Schrägschubfläche ein im wesentlichen geradlinig verlaufende Kontur aufweist. Der einfacheren Herstellung wegen ist die konvex gewölbte Kontur an der Klaue vorgesehen.

Das erste Kopplungsstück ist zweckmäßigerweise an dem Basisteil verschiebbar geführt, beispielsweise mit Hilfe basisteilfester Führungsschienen oder dgl. Eine besonders stabile Führung läßt sich erreichen, wenn das Basisteil ein Führungsrohr trägt, in welchem das erste Kopplungsstück in Richtung der Rohrachse verschiebbar geführt ist. Vorzugsweise ist das erste Kopplungsstück mit Kippspiel in dem Führungsrohr geführt. Dies hat den Vorteil, daß sich das erste Kopplungsstück selbsttätig zum zweiten Kopplungsstück ausrichten kann, selbst wenn das zweite Kopplungsstück mit einem Kippfehler aufgesetzt wird.

Das Führungsrohr steht bevorzugt über das erste Kopplungstück in Richtung der Rohrachse vor und bildet zugleich eine Führung für das zweite Kopplungsstück, die die Kopplungsstücke relativ zueinander zentriert. Das dem zweiten Kopplungsstück nahe Ende des Führungsrohrs kann hierbei einen Einführtrichter bilden, der das Zusammenführen der beiden Kopplungsstücke erleichtert.

Als zweckmäßig hat es sich erwiesen, wenn das zweite Kopplungsstück nahe seinem dem ersten Kopplungsstück zugewandten Ende einen radial abstehenden Ringflansch für die Führung an dem Führungsrohr aufweist. Der Führungsflansch begrenzt die axiale Höhe der an dem Führungsrohr geführten Flächen des zweiten Kopplungsstücks, so daß dieses auch bei vergleichsweise großem Kippfehler ohne zu verklemmen in das Führungsrohr eingeführt werden kann. Da der Ringflansch dem ersten Kopplungsstück dicht benachbart vorgesehen ist, verringert sich auch der Zentrierfehler bei schräg eingeführtem zweiten Kopplungsstück. Der Ringflansch kann zugleich de Schrägschubfläche des zweiten Kopplungsstücks bilden.

Bei der Öffnungs- und Schließbewegung der Kopplungsvorrichtung bewegt sich das erste Kopplungsstück relativ zum Basisteil. Für den Ausgleich dieser Verschiebebewegung relativ zu weiteren an das Basisteil anschließenden Abschnitten des Flüssigkeit- oder Schüttgutwegs kann zwischen diesen Abschnitten und dem ersten Kopplungsstück bspw. ein flexibles Schlauchstück vorgesehen sein. In einer bevorzugten Ausgestaltung ist jedoch an dem Basisteil ein Rohrstück gehalten, dessen oberes Ende abgedichtet und in Richtung der Rohrachse verschiebbar an dem ersten Kopplungsstück und insbesondere in dem ersten Kopplungsstück geführt ist. Eine solche Ausführungsform erlaubt insbesondere einen stabilen stationären Anschluß. Um die Abnutzung in Grenzen zu halten und Klemmen des ersten Kopplungsstücks zu verhindern, ist zweckmäßigerweise zwischen dem oberen Ende des Rohrstücks und dem ersten Kopplungsstück eine insbesondere am ersten Kopplungsstück gehaltene Gleithülse vorgesehen.

Vorzugsweise wird der Mediendurchfluß durch die Kopplungsvorrichtung von der Lage der Klauen abhängig gemacht, z.B. Schalterbetätigung oder mechanische Hahnöffnung abhängig von der Klemmstellung.

Anstelle speziell mit einer Schürze versehener besonderer Fässer, welche in der Herstellung teuer sind, können auch übliche Fässer mit einem erfindungsgemäß angepaßten Adapterring verwendet werden. Je Abfüllanlage genügen 1 bis 3 derartiger Adapterringe, welche jeweils im wesentlichen aus der das Faß verlängernden Schürze und einem Boden innerhalb der Schürze bestehen. Die Befestigung des Adapterrings am Faß erfolgt mit einem üblichen Spannring anstelle des abgenommenen Deckels. Nach dem Anbringen des Adapterrings wird das Faß gestürzt und auf der Schürze des Adapterrings abgestellt. Über einen im Boden des Adapterrings vorgesehenen Ablaßhahn wird das Faß entleert.

Im folgenden wird die Erfindung anhand einer Zeichnung näher erläutert. Hierbei zeigt
- Fig. 1: eine Seitenansicht einer Zapfanlage für automatisch ankoppelbare Mehrwegbehälter;
- Fig. 1a: ein Faß mit Adapterring;
- Fig. 2: eine Schnittansicht einer automatischen Koppelvorrichtung der Zapfanlage gemäß dem Pfeil II in Fig. 1 bei angekoppeltem Mehrwegbehälter;
- Fig. 3: eine Schnittansicht der Koppelvorrichtung bei abgehobenem Mehrwegbehälter;
- Fig. 4: eine teilweise aufgebrochene Darstellung einer Klaue der Koppelvorrichtung, gesehen entlang einer Linie IV-IV in Fig. 2 und
- Fig. 5: eine Variante einer bei der Koppelvorrichtung gemäß den Fig. 1 bis 3 verwendbaren Klaue.

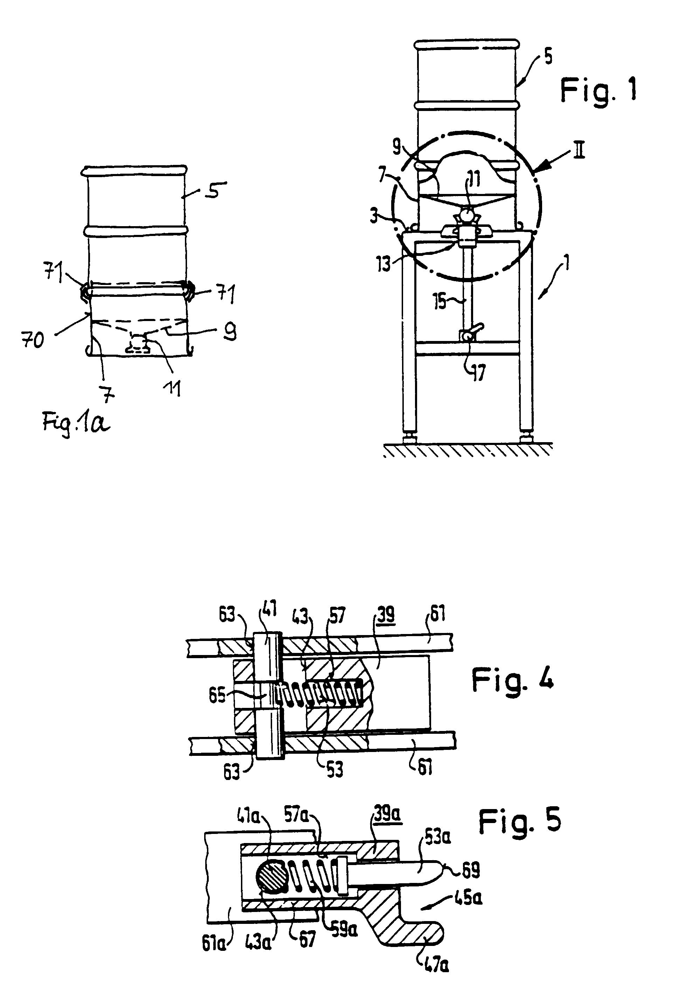

Wiederbefüllbare Mehrwegbehälter für Flüssigkeiten oder dgl. sollen mit möglichst geringem Montageaufwand an Zapfvorrichtungen angeschlossen werden können. Fig. 1 zeigt eine Zapfvorrichtung in Form eines Tisches 1, auf dessen Tischfläche 3 ein wiederbefüllbarer Mehrwegbehälter, hier in Form eines Fasses 5, abgestellt werden kann. Das Faß 5 steht auf einer durch seine Umfangswand gebildeten Schürze 7 und trägt an seinem Boden 9 einen Ablaßhahn 11, der über eine nachfolgend noch näher erläuterte automatische Kopplungsvorrichtung 13 mit dem oberen Ende eines Fallrohrs 15 abgedichtet kuppelbar ist. Anstelle eines derartigen Spezialfasses können, wie in Fig. 1a dargestellt, auch handelsübliche Fässer verwendet werden, indem auf diese im Austausch gegen deren Deckel ein Adapterring (70) aufgesetzt und mit dem Spannring (71) für den Deckel befestigt wird. Der Adapterring (70) umfaßt somit die Schürze 7 sowie den Boden 9 mit dem Ablaßhahn 11. An das untere Ende des Fallrohrs 15 ist ein Zapfhahn 17 angeschlossen, über den der Inhalt des Fasses 5 dosiert entnommen werden kann. Anstelle des Zapfhahns 17 können ggfs. auch andere Zapfeinrichtungen, wie z.B. eine Pumpe oder dgl., vorgesehen sein. Der Hahn 11 ist bei auf die Zapfvorrichtung 1 aufgesetztem Faß 5 dauernd geöffnet und wird lediglich für den Transport des Fasses 5 geschlossen.

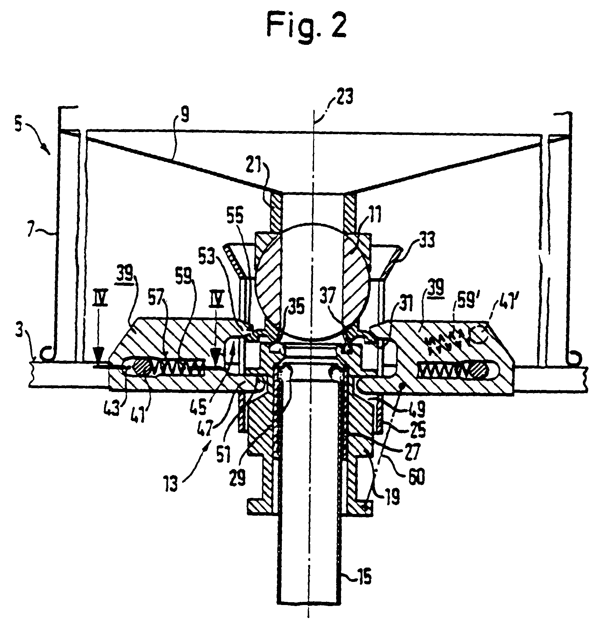

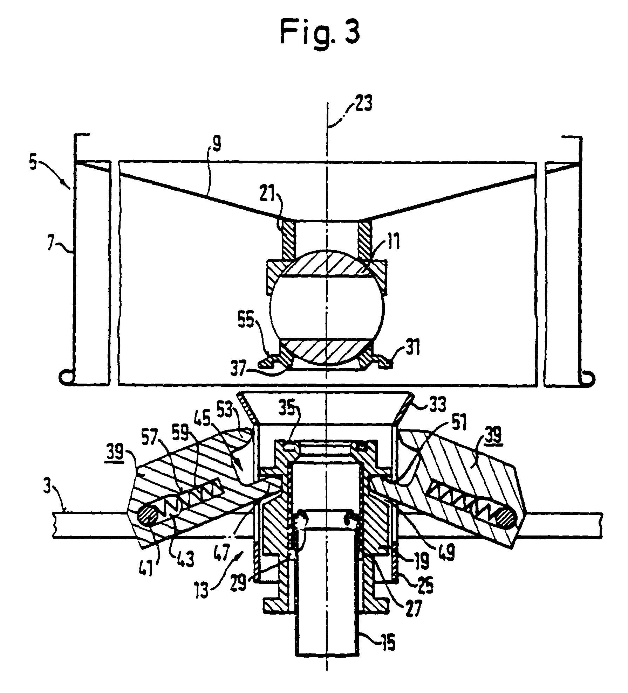

Die Fig. 2 und 3 zeigen Einzelheiten der Kopplungsvorrichtung 13 bei auf die Tischfläche 3 aufgesetztem Faß 5 (Fig. 2) bzw. von der Tischfläche 3 abgehobenem Faß 5 (Fig. 3). Die Kopplungsvorrichtung 13 umfaßt zwei rohrförmige Kopplungsstücke 19, 21, die stirnseitig abgedichtet miteinander kuppelbar sind. Sowohl das Schließen als auch das Öffnen der Koppelvorrichtung 13 erfolgt, abgesehen vom Öffnen bzw. Schließen des faßseitigen Hahns 11, selbsttätig. Die Kopplungsstücke 19, 21 sind zumindest im Bereich ihrer miteinander zu koppelnden Stirnseiten rotationssymmetrisch, wobei das untere Kopplungsstück 19 abgedichtet mit dem Fallrohr 15 verbunden ist, während das obere Kopplungsstück 21 eine Baueinheit mit dem Hahn 11 bildet und fest am Boden 9 des Fasses 5 angebracht ist. Die bei 23 angedeuteten Rohrachsen der Kopplungsstücke 19, 21 verlaufen in Gebrauchslage im wesentlichen vertikal. Es ist jedoch jede andere Lage möglich.

Das untere Kopplungsstück 19 ist in einem Führungsrohr 25 des Zapftisches vertikal mit etwas Kippspiel verschiebbar geführt und ist mit einer Gleithülse 27 ausgekleidet, an der das obere Ende des Fallrohrs 15 mit einem Dichtring 29 abgedichtet anliegt. Die Abmessungstoleranzen sind so gewählt, daß das Fallrohr 15 ebenfalls eine geringe Kippbewegung des Kopplungsstücks 19 zuläßt. Das untere Ende des Fallrohrs kann, falls es sich um ein starres Fallrohr 15 handelt, ebenfalls gelenkig mit dem Zapfhahn 17 verbunden sein.

Das obere Kopplungsstück 21 steht vom Boden 9 des Fasses 5 nach unten ab und befindet sich zu seinem Schutz vollständig innerhalb des von der Schürze 7 des Fasses 5 umschlossenen Raums. An seinem dem Kopplungsstück 19 zugewandten, unteren Ende trägt das Kopplungsstück 21 einen radial abstehenden Ringflansch 31, mit dem es in dem über das Kopplungsstück 19 nach oben vorstehenden Führungsrohr 25 radial zur Rohrachse 23 geführt und relativ zum Kopplungsstück 19 zentriert wird. Ein am oberen Ende des Führungsrohrs 25 angeordneter, nach oben hin sich öffnender Einführtrichter 33 erleichtert das Zusammenführen der Kopplungsstücke 19, 21.

Eines der Kopplungsstücke, hier das untere Kopplungsstück 19, trägt an seiner Stirnseite eine elastische Ringdichtung 35, während das andere Kopplungsstück, hier das obere Kopplungsstück 21, stirnseitig eine auf die Ringdichtung 35 aufsetzbare Ringschneide 37 bildet. Die Anpreßkraft, mit der die Ringschneide 37 den Dichtring 35 belastet, wird jedoch nicht durch das Gewicht des Fasses 5 bestimmt, sondern durch mehrere federbelastete Klauen 39, die in gleichen Winkelabständen voneinander um das Kopplungsstück 19 herum an dem Zapftisch schwenkbar gelagert sind. Die Klauen 39 sind an Zapfen 41 des Zapftisches um senkrecht zur Axiallängsschnittebene des Kopplungsstücks 19 verlaufende Schwenkachsen schwenkbar gelagert. Die Zapfen 41 durchsetzen Langlöcher 43 der Klauen 39, die eine Verschiebebewegung der Klauen 39 in der Axiallängsschnittebene zulassen. Die den Kopplungsstücken 19, 21 benachbarten Enden der Klauen 39 bilden je eine zweischenklige Gabel 45, die mit einem ersten Schenkel 47, eine vom Kopplungsstück 21 axial wegweisende, durch eine Ringnut 39 gebildete Anschlagschulter 51 des Kopplungsstücks 19 hintergreift und mit ihrem zweiten Schenkel 53 an einem Außenkonus 55 anliegt, der auf der vom Kopplungsstück 19 abgewandten Seite des Ringflansches 31 angeformt ist und sich vom Kopplungsstück 19 weg gerichtet verjüngt. Während der Außenkonus 55, gesehen in der Axiallängsschnittebene, eine geradlinige Kontur hat, ist die Kontur des am Außenkonus 55 anliegenden Schenkels 53 der Klaue 39 konvex gekrümmt, um eine definierte Anlage sicherzustellen. Auf der den Kopplungsstücken 19, 21 zugewandten Seite der Zapfen 51 sind in Kammern 57 der Klauen 39 Schraubendruckfedern 59 zwischen dem Zapfen 41 und der Klaue 39 eingespannt, die die Klauen 39 zur Rohrachse 23 hin belasten.

Der Außenkonus 55 bildet zusammen mit den konkav gekrümmten Schrägschubflächen der Schenkel 53 ein Keilflächengetriebe, das die radiale Schubkraft der Klauen 39 in eine axiale Schubkraft umsetzt, die die Kopplungsstücke 19, 21 axial gegeneinanderdrückt. Da das Faß 5 mit seiner Schürze 7 auf der Tischfläche 3 aufliegt, ist das Kopplungsstück 21, bezogen auf die Tischfläche 3, fixiert. Das Keilflächengetriebe setzt die radiale Schubbewegung der Klaue 39 in eine Hubbewegung um, die das relativ zur Tischfläche 3 bewegliche Kopplungsstück 19 nach oben gegen das Kopplungsstück 21 zieht. Die Anpreßkraft wird hierbei ausschließlich durch die Federkraft der Federn 59 bestimmt. Durch geeignete Bemessung der Federkraft der Federn läßt sich eine ausreichende Dichtwirkung bei optimaler Schonung der Ringdichtung 35 erreichen. Da mehrere Klauen 39 in Umfangsrichtung verteilt vorgesehen sind, wird die Ringdichtung 35 in Umfangsrichtung gleichmäßig belastet. Dieses Verhalten ändert sich auch nicht, wenn die Rohrachse 23 des Kopplungsstücks 21 gegen die Tischfläche 3 schief geneigt verläuft. Das Kopplungsstück 19 kann sich aufgrund des Kippspiels, mit dem es im Führungsrohr 25 geführt ist, achsparallel zum Kopplungsstück 21 ausrichten. Aufgrund der konkaven Wölbung der Schrägschubfläche des Schenkels 53 jeder Klaue 39 ändern sich die Kraftübertragungsverhältnisse zwischen Klauen 39 und dem Außenkonus 55 nur unwesentlich.

Fig. 3 zeigt die Verhältnisse bei geöffneter Kopplungsvorrichtung 13 vor dem Absetzen oder nach dem Abheben des Fasses 5 von der Tischfläche 3. Der Hahn 11 ist geschlossen und die Klauen 39 sind soweit nach oben geschwenkt, daß ihre Schenkel 53 aus dem Führungsrohr 25 ausgetreten sind. Die Schenkel 47 der Klauen 39 haben das Kopplungsstück 19 nach oben zum Einführtrichter 33 hin angehoben. Wird bspw. das Faß 5 abgesenkt, so lenkt der Führungsrichter 33 das Kopplungsstück 21 in das Führungsrohr 25 hinein. Die am Dichtring 35 anliegende Ringschneide 37 drückt das Kopplungsstück 19 nach unten. Das Kopplungsstück 19 nimmt über seine Schulter 51 die Klauen 39 mit und gleichzeitig legen sich die Schenkel 53 an den Außen konus 55 an. Mit dem Eingriff zwischen Außenkonus 55 und Schenkeln 53 geht die bis dahin kreisförmige Bewegung der Schenkel 53 in eine Bewegung parallel zur Rohrachse 23 über, wodurch sich der Abstand zwischen dem Kontaktpunkt und dem Zapfen 1 verringert und die ggfs. vorgespannt eingebauten Federn 59 weiter gespannt werden. Mit der Anlage der Schürze 7 auf der Tischfläche 3 kommt die Schwenkbewegung der Klauen 39 zur Ruhe und die Anpreßkraft, mit der die Ringdichtung 35 gegen die Ringschneide 39 gedrückt wird, wird ausschließlich durch die Kraft der Federn 59 bestimmt. Beim Lösen der Kopplungsvorrichtung verläuft die Bewegungsfolge in umgekehrter Reihenfolge. In jedem Fall genügt es jedoch, nur das Faß 5 von der Tischfläche 3 abzuheben.

Der in den Fig. 2 und 3 dargestellte Schenkel 47 der Klaue 39 hat die Funktion eines Mitnahmeorgans, welches das Kopplungsstück 19 mit der Klaue 39 kuppeln soll. Da dieses Mitnahmeorgan im dargestellten Ausführungsbeispiel lediglich Zugkräfte übertragen muß, kann anstelle des Schenkels 47 auch eine Seilverbindung zwischen dem Kopplungsstück 19 und der Klaue 39 vorgesehen sein, wie dies in Fig. 2 bei 60 angedeutet ist.

Die Richtung der von der Feder 59 über die Klaue 39 auf die Kopplungsstücke 19, 21 ausgeübten, resultierenden Kraft schneidet die Achse des Zapfens 41 und ändert ihren Winkel zur Rohrachse 23 während des Öffnens und Schließens der Kopplungsvorrichtung. Abhängig von der Lage der Tischfläche 3 relativ zur Achse der Zapfen 41 und damit der Position der Kopplungsstücke 19, 21 relativ zu den Klauen 39 bei an der Tischfläche 3 anliegender Schürze 7, können sich die Klauen 39 bei auf die Tischfläche 3 abgesetztem Faß 5 in einer Vortotpunktlage befinden. Während in der Totpunktlage die resultierende Kraftrichtung der Klauen senkrecht zur Rohrachse 23 verläuft, belasten die Federn 59 die Klauen 39 in der Vortotpunktlage in Öffnungsrichtung der Kopplungsvorrichtung 13, während sie in Übertotpunktlage die Kopplungsvorrichtung 13 in Schließrichtung spannen. Fig. 2 zeigt in vollen Linien die Klauen in Totpunktlage bei geschlossener Kopplungsvorrichtung. Diese Anordnungsweise erlaubt optimale Ausnutzung der Federkräfte. Gestrichelt eingezeichnet ist bei 41' jedoch auch die Lage der Zapfen mit daran abgestützter Feder 59' für eine Übertotpunktlage. Die Anordnung der Klauen 39 in Übertotpunktlage hat den Vorteil, daß nach Überschreiten des Übertotpunkts die Federkräfte während des Schließvorgangs der Kopplungsvorrichtung wieder abnehmen. Beim Öffnen der Kopplungsvorrichtung muß deshalb zunächst die zur Totpunktlage hin zunächst zunehmende Federkraft überwunden werden. Diese Federcharakteristik kann zur gegenseitigen Verrastung der beiden Kopplungsstücke 19, 21 aneinander unabhängig von der Gewichstbelastung durch das Faß 5 ausgenutzt werden. Dies kann für Fässer oder Behälter mit flexiblen und nachgiebigen Böden von Vorteil sein, bei welchen die das Kopplungsstück 21 nach unten drückende Gewichtskraft mit zunehmender Entleerung des Behälters abnimmt. Nach dem vorstehenden Prinzip der Übertotpunktlage der Klauen lassen sich aber auch sonstige selbsttätig schließende und öffnende Kopplungsvorrichtungen, bspw. für Schlauchkupplungen, aber auch für mechanische oder elektrische Verbindungen, aufbauen.

Fig. 4 zeigt Einzelheiten der Lagerung der Klauen 39. Die Klauen sind in Achsrichtung des Zapfens 41 zwischen zwei Wangen 61 geführt, wobei der Zapfen 41 den axial gegenüberliegenden Bohrungen 63 der Wangen 61 sitzt. Bei der Kammer 57 handelt es sich um eine das Langloch 43 schneidende Bohrung, die die Feder 59 aufnimmt. Zur axialen Fixierung des Zapfens 41 in den Bohrungen 63 ist der Zapfen 41 mit einer Umfangsnut 65 versehen, in die die Feder 59 eingeschnappt ist. Die Feder 59 wird damit zur Fixierung des Zapfens 41 ausgenutzt.

Fig. 5 zeigt eine Variante einer Klaue 39a, die anstelle der Klaue 39 bei der anhand der Fig. 1 bis 4 erläuterten Kopplungsvorrichtung eingesetzt werden kann. Gleichwirkende Komponente sind mit den Bezugszahlen der Fig. 1 bis 4 bezeichnet und zur Unterscheidung mit dem Buchstaben a versehen. Zur Erläuterung wird auf die Beschreibung der Fig. 1 bis 4 Bezug genommen. Die Klaue 39a hat einen Grundkörper 67, der an seinem den nicht dargestellten Kopplungsstücken zugewandten Ende wiederum eine zweischenklige Gabel 45a zur Verklammerung der Kopplungsstücke bildet. Während der dem unteren Kopplungsstück in Fig. 2 zugeordnete Schenkel 47a einteilig mit dem Grundkörper 67 verbunden ist, ist der dem oberen Kopplungsstück zugeordnete Schenkel 53a quer zu dem die Klaue 39a an tischfesten Wangen 61a lagernden Zapfen 41a verschiebbar an dem Grundkörper 67 geführt. Der Schenkel 53a ist bspw. als zylindrischer Bolzen ausgebildet, der an seinem den Kopplungsstücken zugewandten äußeren Ende 69 kugelig oder ballig geformt ist und mit seinem inneren Ende in eine von dem Zapfen 41a quer durchsetzte Kammer 57a des Grundkörpers 67 ragt. Zwischen dem inneren Ende des Bolzens 53a und dem Zapfen 41a ist eine Druckfeder 59a eingespannt, die den Bolzen 53a nach außen drückt. Im Unterschied zur Klaue 39 der Fig. 2 bis 4 durchsetzt der Zapfen 41a jedoch kein Langloch, sondern eine zylindrische Bohrung 43a des Grundkörpers 67. Die Klaue 39a gemäß Fig. 5 zeichnet sich durch besonders exakte Führung des mit dem Außenkonus des oberen Kopplungsstücks zusammenwirkenden Endes 67 relativ zum Tisch aus. Der Zapfen 41a kann entsprechend Fig. 4 mit einer Umfangsnut für den Eingriff der Feder 59a versehen sein, um den Zapfen 41a und die Klaue 39a relativ zueinander zu fixieren.

## Patentansprüche

1. Kopplungsvorrichtung zum endseitig abgedichteten Koppeln von zwei im wesentlichen rohrförmigen Kopplungsstücken (19, 21),
gekennzeichnet durch
ein Basisteil (1), an welchem ein erstes (19) der beiden Kopplungsstücke (19, 21) im wesentlichen in Richtung seiner Rohrachse (23) verschiebbar geführt ist und welches einen Anschlag aufweist, an dem ein mit einem zweiten (21) der beiden Kopplungsstücke (19, 21) verbundener Gegenanschlag in der Kopplungsendstellung, in welcher die Kopplungsstücke (19, 21) gekuppelt sind, in Richtung seiner Rohrachse (23) zum ersten Kopplungsstück (19) hin fixiert ist,
wenigstens eine an dem Basisteil (1) um eine quer zu einer Axiallängsschnittebene des ersten Kopplungsstücks (19) verlaufenden Schwenkachse (41) schwenkbar und in der Axiallängsschnittebene verschiebbar geführte Klaue (39), die über ein Mitnahmeorgan (47; 61) mit dem ersten Kopplungsstück (19) gekuppelt ist, ein Keilflächengetriebe zwischen dem zweiten Kopplungsstück (21) und jeder Klaue (39), eine jede Klaue (39) zur Rohrachse (23) der Kopplungsstücke (19, 21) hin federnd vorspannende Federeinrichtung (59).

2. Kopplungsvorrichtung nach Anspruch 1,
dadurch gekennzeichnet,
daß das Keilflächengetriebe einander zugeordnete Schrägschubflächen (53, 55) an jeder Klaue und dem zweiten Kopplungsstück (21) umfaßt, wobei die Schrägschubfläche (55) des zweiten Kopplungsstücks dem ersten Kopplungsstücks (19) abgewandt ist.

3. Kopplungsvorrichtung nach Anspruch 1,
dadurch gekennzeichnet,
daß die Klaue (39) mittels eines Zapfen-Langloch-Gelenks (41, 43) sowohl schwenkbar als auch quer zur Rohrachse (23) verschiebbar an dem Basisteil (1) gelagert ist.

4. Kopplungsvorrichtung nach Anspruch 3,
dadurch gekennzeichnet,
daß das Langloch (43) in der Klaue (39) vorgesehen ist und auf der der Schrägschubfläche (53) der Klaue (39) zugewandten Seite des das Langloch (43) durchsetzenden Zapfens (41) in der Klaue (39) eine in Längsrichtung des Langlochs (43) verlaufende, zum Langloch (43) hin offene Kammer (57) vorgesehen ist, in der eine an dem Zapfen (41) abgestützte Feder (59) angeordnet ist.

5. Kopplungsvorrichtung nach Anspruch 4,
dadurch gekennzeichnet,
daß der Zapfen (41) eine Umfangsnut (65) aufweist, in die die Feder (59) zur Fixierung von Klaue (39) und Zapfen (41) relativ zueinander eingreift.

6. Kopplungsvorrichtung nach Anspruch 1,
dadurch gekennzeichnet,
daß die Klaue (39a) ein im wesentlichen ohne radiales Spiel mittels eines Zapfenlagers (41a, 43a) schwenkbar an dem Basisteil gelagertes erstes Klauenteil (67) sowie ein quer zur Rohrachse verschiebbar an dem ersten Klauenteil (67) geführtes zweites Klauenteil (53a) aufweist, das von einer Feder (59a) relativ zum ersten Klauenteil (67) zur Rohrachse hin vorgespannt ist.

7. Kopplungsvorrichtung nach Anspruch 1,
dadurch gekennzeichnet,
daß das den Kopplungsstücken (19, 21) zugewandte Ende der Klaue (39) eine zweischenklige Gabel (45) bildet, deren erster Schenkel (53) die Schrägschubfläche (53) aufweist, und deren zweiter Schenkel (47) eine vom zweiten Kopplungsstück (21) wegweisende Anlagefläche (51) des ersten Kopplungsstücks (19) hintergreift.

8. Kopplungsvorrichtung nach Anspruch 1,
dadurch gekennzeichnet,
daß die Klaue (39) über ein flexibles Zugorgan (60) mit dem ersten Kopplungsstück (19) gekuppelt ist.

9. Kopplungsvorrichtung nach Anspruch 1,
dadurch gekennzeichnet,
daß die Kopplungsstücke (19, 21) rotationssymmetrisch ausgebildet sind und mehrere in gleichen Winkelabständen um die Rohrachse (23) herum angeordnete Klauen (39) an dem Basisteil (1) gelagert sind.

10. Kopplungsvorrichtung nach Anspruch 2,
dadurch gekennzeichnet,
daß die Schrägschubfläche (55) des zweiten Kopplungsstücks (21) als Konusfläche ausgebildet ist.

11. Kopplungsvorrichtung nach Anspruch 2,
dadurch gekennzeichnet,
daß, gesehen in der Axiallängsschnittebene, die Schrägschubfläche (55) des zweiten Kopplungsstücks oder die Schrägschubfläche (53) der Klaue (39) eine konvex gewölbte Kontur und die jeweils andere Schrägschubfläche eine im wesentlichen geradlinig verlaufende Kontur aufweist.

12. Kopplungsvorrichtung nach Anspruch 1,
dadurch gekennzeichnet,
daß das Basisteil (1) ein Führungsrohr (25) trägt, in welchem das erste Kopplungsstück (19) mit Kippspiel in Richtung der Rohrachse (23) verschiebbar geführt ist.

13. Kopplungsvorrichtung nach Anspruch 12,
dadurch gekennzeichnet,
daß das Führungsrohr (25) über das erste Kopplungsstück (19) in Richtung der Rohrachse (23) vorsteht und zugleich eine Führung für das zweite Kopplungsstück (21) bildet.

14. Kopplungsvorrichtung nach Anspruch 13,
dadurch gekennzeichnet,
daß das dem zweiten Kopplungsstück (21) nahe Ende des Führungsrohrs (25) einen Einführtrichter (33) für das zweite Kopplungsstück (21) bildet.

15. Kopplungsvorrichtung nach Anspruch 13,
dadurch gekennzeichnet,
daß das zweite Kopplungsstück (21) nahe seinem dem ersten Kopplungsstück (19) zugewandten Ende einen radial abstehenden Ringflansch (31) für die Führung an dem Führungsrohr (25) aufweist.

16. Kopplungsvorrichtung nach Anspruch 15,
dadurch gekennzeichnet,
daß der Ringflansch (31) die Schrägschubfläche (55) des zweiten Kopplungsstücks (21) bildet.

17. Kopplungsvorrichtung nach Anspruch 1,
dadurch gekennzeichnet,
daß an dem Basisteil (1) ein Rohrstück (15) gehalten ist, das mit einem Ende abgedichtet und in Richtung der Rohrachse (23) verschiebbar an dem ersten Kopplungsstück (19) geführt ist.

18. Kopplungsvorrichtung nach Anspruch 17,
dadurch gekennzeichnet,
daß zwischen dem einen Ende des Rohrstücks (15) und dem ersten Kopplungsstück (19) eine Gleithülse (27) vorgesehen ist.

19. Kopplungsvorrichtung nach Anspruch 1,
dadurch gekennzeichnet,
daß das zweite Kopplungsstück (21) über einen Ablaßhahn (11) fest mit einem Behälter verbunden ist.

20. Kopplungsvorrichtung nach Anspruch 19,
dadurch gekennzeichnet,
daß der Behälter den Gegenanschlag bildet.

21. Kopplungsvorrichtung nach Anspruch 20,
dadurch gekennzeichnet,
daß der Behälter als Faß (5) ausgebildet ist, welches an einem Ende durch eine den Gegenanschlag bildende Schürze (7) verlängert ist.

22. Kopplungsvorrichtung nach Anspruch 21,
dadurch gekennzeichnet,
daß die Schürze (7) als Teil des Fasses (5) ausgebildet und gegenüber dessen abnehmbarem Deckel angeordnet ist.

23. Kopplungsvorrichtung nach Anspruch 21,
dadurch gekennzeichnet,
daß die Schürze (7) an einem Adapterring ausgebildet ist, welcher anstelle des Deckels mit dem Faß (5) verbindbar ist.

24. Kopplungsvorrichtung nach Anspruch 21,
dadurch gekennzeichnet,
daß innerhalb der Schürze (7) ein Boden (9) angeordnet ist, der mit dem Ablaßhahn (11) verbunden ist.

25. Adapterring (70) für ein Faß (5), welcher anstelle eines abnehmbaren Deckels mit dem Faß (5) verbindbar ist und einen Boden (9) enthält, der mit einem zu einem ersten Kopplungsstück (19) eines Basisteils (1) passenden zweiten Kopplungsstück (21) versehen ist, welche zusammen mit Klauen (39) des Basisteils (1) ein die beiden Kopplungsstücke (19, 21) gegeneinander drückendes Keilflächengetriebe bilden, und der einen Ablaßhahn (11) aufweist, welcher das zweite Kopplungsstück (21) mit einer Öffnung im Boden (9) verbindet, um ein Entleeren des umgestürzten, auf den Adapterring (70) abgestellten Fasses (5) zu ermöglichen.

## Claims

1. Coupling device for the sealed coupling of the ends of two substantially tubular coupling parts (19,21), characterised by a base part (1) on which a first (19) of the two coupling parts (19,21) is guided to slide substantially in the direction of its tube axis (23) and which comprises a stop, on which is fixed a counter-stop connected to a second (21) of the two coupling parts (19,21) in the coupling end position, in which the coupling parts (19,21) are coupled, in the direction of its tube axis (23) towards the first coupling part (19),
at least one claw (39) able to tilt on the base part (1) about a swivel axis (41) extending at right angles to an axial longitudinal sectional plane of the first coupling part (19) and guided to slide in the axial longitudinal sectional plane, which claw is coupled by way of an entrainment member (47;61) to the first coupling part (19),
a wedge surface transmission between the second coupling part (21) and each claw (39),
a spring device (59) resiliently pre-tensioning each claw (39) towards the tube axis (23) of the coupling parts.

2. Coupling device according to Claim 1, characterised in that the wedge surface transmission comprises inclined sliding surfaces (53,55) associated with each other on each claw and the second coupling part (21), the inclined sliding surface (55) of the second coupling part being remote from the first coupling part (19)

3. Coupling device according to Claim 1, characterised in that by means of a pin-slot joint (41,43), the claw (39) is mounted on the base part (1) so that it is both able to tilt as well as slide at right angles to the tube axis (23).

4. Coupling device according to Claim 3, characterised in that the slot (43) is provided in the claw (39) and on the side of the pin (41) passing through the slot (43), which side faces the inclined sliding surface (53) of the claw (39), a chamber (57) extending in the longitudinal direction of the slot (43) and open towards the slot (43) is provided in the claw ( 39), in which chamber a spring (59) supported on the pin (41) is located.

5. Coupling device according to Claim 4, characterised in that the pin (41) comprises a peripheral groove (65), in which engages the spring (59) for fixing the claw (39) and pin (41) relative to each other.

6. Coupling device according to Claim 1, characterised in that the claw (39a) comprises a first claw part (67) mounted to tilt on the base part substantially without radial clearance by means of a journal bearing (41a,43a) as well as a second claw part (53a) guided on the first claw part (67) to slide at right angles to the tube axis, which claw part (53a) is pre-tensioned towards the tube axis by a spring (59a) relative to the first claw part (67).

7. Coupling device according to Claim 1, characterised in that the end of the claw (39) facing the coupling parts (19,21) forms a two-legged fork (45), whereof the first leg (53) comprises the inclined sliding surface (53) and whereof the second leg (47) engages behind a stop face (51) of the first coupling part (19) pointing away from the second coupling part (21).

8. Coupling device according to Claim 1, characterised in that the claw (39) is coupled to the first coupling part (19) by way of a flexible traction member (60).

9. Coupling device according to Claim 1, characterised in that the coupling parts (19,21) are constructed to be rotationally symmetrical and a plurality of claws (39) arranged at equal angular intervals around the tube axis (23) are mounted on the base part (1).

10. Coupling device according to Claim 2, characterised in that the inclined sliding surface (55) of the second coupling part (21) is constructed as a conical surface.

11. Coupling device according to Claim 2, characterised in that, seen in the axial longitudinal sectional plane, the inclined sliding surface (55) of the second coupling part or the inclined sliding surface (53) of the claw (39) has a contour with a convex curvature and the respective other inclined sliding surface has a contour extending substantially in a straight line.

12. Coupling device according to Claim 1, characterised in that the base part (1) supports a guide tube (25), in which the first coupling part (19) is guided to slide with tilting clearance in the direction of the tube axis (23).

13. Coupling device according to Claim 12, characterised in that the guide tube (25) projects beyond the first coupling part (19) in the direction of the tube axis (23) and at the same time forms a guide for the second coupling part (21).

14. Coupling device according to Claim 13, characterised in that the end of the guide tube (25) close to the second coupling part (21) forms an insertion funnel (33) for the second coupling part (21).

15. Coupling device according to Claim 13, characterised in that close to its end facing the first coupling part (19), the second coupling part (21) comprises a radially projecting annular flange (31) for guidance on the guide tube (25).

16. Coupling device according to Claim 15, characterised in that the annular flange (31) forms the inclined sliding surface (55) of the second coupling part (21).

17. Coupling device according to Claim 1, characterised in that retained on the base part (1) is a piece of tube (15), which sealed at one end and able to slide in the direction of the tube axis (23) is guided on the first coupling part (19).

18. Coupling device according to Claim 17, characterised in that a sliding sleeve (27) is provided between one end of the piece of tube (15) and the first coupling part (19).

19. Coupling device according to Claim 1, characterised in that the second coupling part (21) is securely connected to a container by way of a delivery cock (11).

20. Coupling device according to Claim 19, characterised in that the container forms the counter-stop.

21. Coupling device according to Claim 20, characterised in that the container is constructed as a barrel (5), which is extended at one end by an apron (7) forming the counter-stop.

22. Coupling device according to Claim 21, characterised in that the apron (7) is constructed as part of the barrel (5) and is located opposite its removable cover.

23. Coupling device according to Claim 21, characterised in that the apron (7) is constructed on an adapter ring, which can be connected to the barrel (5) in place of the cover.

24. Coupling device according to Claim 21, characterised in that located inside the apron (7) is a base (9), which is connected to the delivery cock (11).

25. Adapter ring (70) for a barrel (5), which can be connected to the barrel (5) in place of a removable cover and contains a base (9), which is provided with a second coupling part (21) matching a first coupling part (19) of a base part (1), which together with claws (39) of the base part (1) form a wedge surface transmission pushing the two coupling parts (19,21) towards each other, and which comprises a delivery cock (11), which connects the second coupling part (21) to an opening in the base (9), in order to facilitate emptying of the upturned barrel (5) placed on the adapter ring (70).

## Revendications

1. Dispositif d'accouplement pour réaliser l'accouplement, étanchéifié au niveau des extrémités, de deux pièces d'accouplement (19,21) essentiellement de forme tubulaire, caractérisé par
un élément de base (1), sur lequel une première (19) des deux pièces d'accouplement (19,21) est guidée de manière à être translatable essentiellement dans la direction de son axe (23) et qui possède une butée, contre laquelle une butée antagoniste, qui est reliée à une seconde (21) des deux pièces d'accouplement (19,21), est fixée par rapport à la première pièce d'accouplement (19), dans la direction de l'axe (23) de cette dernière, dans la position finale d'accouplement, dans laquelle les pièces d'accouplement (19,21) sont accouplées,
au moins une griffe (39), qui peut pivoter sur l'élément de base (1) autour d'un axe de pivotement (41), qui est transversal par rapport au plan axial longitudinal de coupe de la première pièce d'accouplement (19), et qui est translatable dans le plan axial longitudinal de coupe et est accouplé, par l'intermédiaire d'un organe d'entraînement (47;61), à la première pièce d'accouplement,
un mécanisme à surfaces coniques disposé entre la seconde pièce d'accouplement (21) et chaque griffe (39), et un dispositif à ressort (59), qui précontraint élastiquement chaque griffe (39) en direction de l'axe (23) des pièces d'accouplement (19,21).

2. Dispositif d'accouplement selon la revendication 1, caractérisé en ce
que le mécanisme à surfaces coniques comprend des surfaces coniques obliques de poussée (53,55), qui sont associées entre elles et sont prévues sur chaque griffe et sur la seconde pièce d'accouplement (21), la surface oblique de poussée (55) de la seconde pièce d'accouplement étant tournée à l'opposé de la première pièce d'accouplement (19).

3. Dispositif d'accouplement selon la revendication 1, caractérisé en ce
que la griffe (39) est montée au moyen d'une articulation à goupille et trou allongé (41,43) sur l'élément de base (1) aussi bien de manière à pouvoir pivoter que de manière à être également translatable transversalement par rapport à l'axe (23).

4. Dispositif d'accouplement selon la revendication 3, caractérisé en ce
que le trou allongé (43) est prévu dans la griffe (39) et que sur le côté, tourné vers la surface oblique de poussée (53) de la griffe (39), de la goupille (41) qui traverse le trou allongé (43) dans la griffe (39), est prévue une chambre (57) qui s'étend dans la direction longitudinale du trou allongé (43) et s'ouvre en direction de ce trou allongé (43) et dans laquelle est disposé un ressort (59), qui prend appui sur la goupille (41).

5. Dispositif d'accouplement selon la revendication 4, caractérisé en ce
que la goupille (41) possède une gorge circonféréentielle (65), dans laquelle le ressort (59) s'engage pour fixer la griffe (39) et la goupille (41) l'une par rapport à l'autre.

6. Dispositif d'accouplement selon la revendication 1, caractérisé en ce
que la griffe (39a) possède un premier élément de griffe (67), qui est monté essentiellement sans jeu radial de manière à pouvoir pivoter sur l'élément de base au moyen d'un palier (41a,43a), ainsi qu'un second élément de griffe (53a), qui est guidé de manière à être translatable transversalement par rapport à l'axe, sur le premier élément de griffe (67) et qui est précontraint par un ressort (59a) en direction de l'axe par rapport au premier élément de griffe (67).

7. Dispositif d'accouplement selon la revendication 1, caractérisé en ce
que l'extrémité de la griffe (39), qui est tournée vers les pièces d'accouplement (19,21), forme une fourche à deux branches (45), dont la première branche (53) comporte la surface oblique de poussée et dont la seconde branche (47) s'engage derrière une surface d'application (51), qui s'étend à l'opposé de la seconde pièce d'accouplement (21), de la première pièce d'accouplement (19).

8. Dispositif d'accouplement selon la revendication 1, caractérisé en ce
que la griffe (39) est accouplée à la première pièce d'accouplement (19) par l'intermédiaire d'un organe flexible de traction (60).

9. Dispositif d'accouplement selon la revendication 1, caractérisé en ce
que les pièces d'accouplement (19,21) sont réalisées avec une symétrie de révolution et que plusieurs griffes (39), disposées à des distances angulaires identiques autour de l'axe de rotation (23), sont montées sur l'élément de base (1).

10. Dispositif d'accouplement selon la revendication 2, caractérisé en ce que la surface oblique de poussée (55) de la seconde pièce d'accouplement (21) est agencée sous la forme d'une surface conique.

11. Dispositif d'accouplement selon la revendication 2, caractérisé en ce
que, dans le plan axial longitudinal de coupe, la surface oblique de poussée (55) de la seconde pièce d'accouplement ou la surface oblique de poussée (53) de la griffe (39) possède un contour cintré avec une forme convexe et que l'autre surface oblique respective de poussée possède un contour qui s'étend essentiellement avec une forme rectiligne.

12. Dispositif d'accouplement selon la revendication 1, caractérisé en ce
que l'élément de base (1) porte un tube de guidage (25), dans lequel la première pièce d'accouplement (19) est guidée de manière à être translatable, avec un jeu de basculement, dans la direction de l'axe (23).

13. Dispositif d'accouplement selon la revendication 12, caractérisé en ce
que le tube de guidage (25) fait saillie au-delà de la première pièce d'accouplement (19) dans la direction de l'axe (23) et forme simultanément un guide pour la seconde pièce d'accouplement (21).

14. Dispositif d'accouplement selon la revendication 13, caractérisé en ce
que l'extrémité du tube de guidage (25), qui est située près de la seconde pièce d'accouplement (21), forme un entonnoir d'introduction (33) pour la seconde pièce d'accouplement (21).

15. Dispositif d'accouplement selon la revendication 13, caractérisé en ce que
le second élément d'accouplement (21) comporte, à proximité de son extrémité tournée vers le premier élément d'accouplement (19), une bride annulaire (31), qui fait saillie radialement, pour le guidage sur le tube de guidage (25).

16. Dispositif d'accouplement selon la revendication 15, caractérisé en ce
que la bride annulaire (31) forme la surface oblique de poussée (55) de la seconde pièce d'accouplement (21).

17. Dispositif d'accouplement selon la revendication 1, caractérisé en ce
que sur l'élément de base (1) est retenu un élément tubulaire (15), qui est étanchéifié au niveau d'une première extrémité et est guidé sur la première pièce d'accouplement (19), en étant translatable dans la direction de l'axe (23).

18. Dispositif d'accouplement selon la revendication 17 , caractérisé en ce
qu'une douille coulissante (27) est prévue entre la première extrémité de l'élément tubulaire (15) et la première pièce d'accouplement (19).

19. Dispositif d'accouplement selon la revendication 1, caractérisé en ce
que la seconde pièce d'accouplement (21) est reliée de façon fixe à un récipient par l'intermédiaire d'un robinet de vidange (11).

20. Dispositif d'accouplement selon la revendication 19, caractérisé en ce
que le récipient forme la butée antagoniste.

21. Dispositif d'accouplement selon la revendication 20, caractérisé en ce
que le récipient est agencé sous la forme d'un fût (5), qui est prolongé, au niveau d'une extrémité, par un tablier (7) formant la butée antagoniste.

22. Dispositif d'accouplement selon la revendication 21, caractérisé en ce
que le tablier (7) est agencé en tant que partie du fût (5) et est disposé à l'opposé du couvercle amovible de ce fût.

23. Dispositif d'accouplement selon la revendication 21, caractérisé en ce
que le tablier (7) est agencé sous la forme d'un anneau d'adaptation, qui peut être relié non pas au couvercle, mais au fût (5).

24. Dispositif d'accouplement selon la revendication 21, caractérisé en ce
qu'à l'intérieur du tablier (7) est disposé un fond (9), qui est relié au robinet de vidange (11).

25. Anneau d'adaptation (70) pour un fût (5), qui peut être relié non pas à un couvercle amovible, mais au fût (5) et comporte un fond (9), qui est pourvu d'un seconde pièce d'accouplement (21), qui s'adapte à une pre mière pièce d'accouplement (19) d'un élément de base (1) e qui forme, conjointement avec des griffes (39) de l'élément de base (1), un mécanisme à surfaces coniques, qui repousse l'une contre l'autre les deux pièces d'accouplement (19, 21) et qui comporte un robinet de vidange (11), qui relie la seconde pièce d'accouplement (21) à une ouverture ménagée dans le fond (9) de manière à permettre un vidage du fût (5) retourné, qui est disposé en étant en appui par l'anneau d'adaptation (70).
